# EUROPÄISCHE PATENTSCHRIFT

(11) **EP 2 580 857 B1**
(45) Veröffentlichungstag und Bekanntmachung des Hinweises auf die Patenterteilung: **27.06.2018**
(21) Anmeldenummer: 11717614.9
(22) Anmeldetag: 02.05.2011
(51) Int. Cl.: H02M 5/458, H02M 7/483

(54) **WELLENGENERATORSYSTEM**
SHAFT-DRIVEN GENERATOR SYSTEM
SYSTÈME DE GÉNÉRATRICE DE LIGNE D'ARBRE

(30) Priorität: 08.06.2010 DE 102010023019
(43) Veröffentlichungstag der Anmeldung: 17.04.2013
(73) Patentinhaber: Siemens Aktiengesellschaft, 80333 München (DE)
(72) Erfinder: BRUNOTTE, Christoph, 91056 Erlangen (DE); HILLER, Marc, 91207 Lauf an der Pegnitz (DE); SOMMER, Rainer, 91336 Heroldsbach (DE)
(86) Internationale Anmeldenummer: PCT/EP2011/056892
(87) Internationale Veröffentlichungsnummer: WO 2011/154196

(56) Entgegenhaltungen:
- EP-A1- 0 682 402
- EP-A2- 2 088 668
- WO-A1-2007/124968
- DE-A1-102008 026 869
- US-A1- 2009 225 570

## Beschreibung

Die Erfindung bezieht sich auf ein Wellengeneratorsystem mit einem Wellengenerator.

Aus der Veröffentlichung "WGA 23 - ein modernes Wellengeneratorsystem", Sonderdruck aus der DE-Zeitschrift "HANSA", 120. Jahrgang, Nr. 13, 1983, Heft Juli, S. 1203-1207, ist ein Wellengeneratorsystem bekannt. Wellengeneratorsysteme sind auf Schiffen häufig angewendete Systeme zur preiswerten Erzeugung elektrischer Energie. Das Wellengeneratorsystem, das Bestandteil eines Bordkraftwerks eines Schiffes ist, weist folgende Komponenten auf:
- den mit variabler Drehzahl angetriebenen Wellengenerator zur Erzeugung elektrischer Energie bei veränderlicher Frequenz,
- den als Zwischenkreis-Umrichter ausgeführten statischen Frequenzumformer zur frequenz- und spannungsmäßigen Entkopplung von Wellengenerator und Bordnetz, bestehend aus generatorseitigem Gleichrichter, netzseitigem Wechselrichter und Gleichstrom- oder -spannungszwischenkreis,
- die bei Stromzwischenkreis-Umrichtern erforderliche Zwischenkreisdrossel zur Glättung des Zwischenkreisstromes,
- den bei Spannungszwischenkreis-Umrichtern erforderlichen Zwischenkreiskondensator zur Glättung der Zwischenkreisspannung,
- die Netzdrossel zur Kurzschlussstrom- und Oberschwingungsbegrenzung,
- die zur Erhöhung der Kurzschlusssicherheit und zur Deckung des Blindstrombedarfs des Netzes erforderliche Blindleistungsmaschine mit eingebautem Anwurfmotor,
- den Erregerstromrichter ggf. mit Anpasstransformator zur Verstellung des Wellengenerator-Erregerstroms im Rahmen einer Wellengenerator-Regelung,
- die vollelektronische Regel-, Steuer- und Überwachungsanlage und
- den Batterie-Unterverteiler zur Versorgung der lebenswichtigen Funktionen des Wellengeneratorsystems im Störungs- und Kurzschlussfall.

Diese Wellengeneratoranlage ist netzseitig mittels eines Schalters mit einer Bordnetz-Sammelschiene verbindbar. Um sicher im Netz extreme Belastungen zu vermeiden, ist als Netzdrossel eine so genannte Duplexdrossel vorgesehen. Mittels dieser Duplexdrossel wird die Ausbreitung von Oberschwingungen verhindert und die Kurzschlussströme werden beträchtlich reduziert. Duplexdrosseln werden häufig auch als Stromteiler-Drosselspule, Ausgleichsdrosseln oder Glättungsdrosseln bezeichnet. Die ideale Duplexdrossel ist ein Spezial-Transformator mit zwei Wicklungen geringer Streuinduktivität auf einem Eisenkern mit mehreren kleinen Luftspalten.

Der Veröffentlichung "Netzgestaltung mit Duplexdrosseln" von W. Schild und Dr. W. Planitz, abgedruckt im Jahrbuch der Schiffbautechnischen Gesellschaft, 91. Band, 1997, S. 173 ff., ist zu entnehmen, wie eine Duplexdrossel zur Erhöhung der Kurzschlusssicherheit eingesetzt wird. In dieser Veröffentlichung werden zwei Netzkonzepte für die Verbesserung der Netzqualität auf einem dieselelektrisch angetriebenen Kreuzfahrtschiff mit Hilfe von Duplexdrosseln vorgestellt. Mit dem Einsatz von Duplexdrosseln werden die Rückwirkungen von elektrischen Propulsions-Systemen vermindert. Diese Netzrückwirkungen, die vom Stromrichter eines Wellengeneratorsystems ausgehen, erzeugen im versorgenden Bordnetz erhebliche Oberschwingungen, wodurch die Netzqualität gemindert wird.

Das Servicenetz auf einem Schiff für die Versorgung von Hilfsbetrieben, der Beleuchtung, der nautischen Geräte und der Kommunikation sowie der Versorgungssysteme im Wohnbereich benötigen eine oberschwingungsarme Versorgungsspannung. Ein überhöhter Klirrfaktor kann zu Zusatzverlusten, Betriebsstörungen und im Grenzfall zur Zerstörung von Komponenten führen. Mittels Duplexdrosseln wird ein oberschwingungsarmes Teilnetz ausgekoppelt.

Dieser Veröffentlichung kann außerdem entnommen werden, dass bei Wellenleistungen von 10MW und mehr direktumrichtergespeiste Synchronmotoren als Propellerantriebe verwendet werden. Neben direktumrichtergespeisten Synchronmotoren werden auch Stromrichtermotoren mit lastkommutierenden Umrichtern als Propellerantrieb eingesetzt.

Aus der DE 10 2006 020 144 B4 bzw. aus der WO 2007/124968A1 ist ein Verfahren zum Betrieb eines Schiffsantriebssystems mit Abwärmerückgewinnung sowie ein Schiffsantriebssystem mit Abwärmerückgewinnung bekannt. Das Schiffsantriebssystem weist unter anderem einen Wellengenerator/-motor auf, der mittels eines Umrichters mit netzseitigem Transformator aus dem Bordnetz versorgt wird. Der Betrieb des Wellengenerators als Motor wird als "Power-Take-In" (PTI) bezeichnet. Der Wellengenerator, der statische Frequenzumrichter und der netzseitige Transformator bilden, sobald Energie vom Wellengenerator in das Bordnetz eingespeist wird, ebenfalls ein Wellengeneratorsystem. Der Betrieb des Wellengenerators als Generator, d.h., es wird elektrische Energie für ein Bordnetz erzeugt, wird als "Power-Take-Off" (PTO) bezeichnet. In diesem Patent wird jedoch dieses Wellengeneratorsystem hauptsächlich als Booster-Antrieb neben dem dieselmotorischen Antrieb eingesetzt. Dadurch kann der Hauptantrieb verbrauchsgünstig betrieben und die Dieselgeneratoraggregate abgeschaltet werden.

In der Zeitspanne, wenn vom Motorbetrieb des Wellengenerators in den Generatorbetrieb umgeschaltet wird, speist eine Energiequelle elektrische Energie in das Schiffsnetz derart ein, dass Spannung und Frequenz des Schiffsnetzes einen jeweils vorbestimmten Grenzwert nicht unterschreiten. Eine derartige Umschaltung erfolgt bei Netzstörungen, insbesondere einem Blackout des Schiffs. Wird das bekannte Wellengeneratorsystem als Booster-Antrieb verwendet, so bildet die Blindleistungsmaschine während der Umschaltung Motor-/Generatorbetrieb diese Energiequelle, aus der das Bordnetz mit Energie versorgt wird.

Bei einer alternativen Ausgestaltung des Wellengeneratorsystems wird als statischer Frequenzumformer ein Spannungszwischenkreis-Umrichter vorgesehen. Dieser Spannungszwischenkreis-Umrichter weist einen Zwischenkreiskondensator auf, der die Energiequelle bildet, die während der Betriebsumschaltung des Wellengenerators Energie in das Schiffsnetz liefert. Eine besonders schnelle Umschaltung wird erreicht, wenn der Spannungszwischenkreis-Umrichter generator- und netzseitig jeweils einen selbstgeführten Pulsstromrichter, insbesondere einen IGBT-Pulsstromrichter, aufweist.

Einen derartigen Spannungszwischenkreis-Umrichter mit generator- und netzseitig jeweils einem IGBT-Pulsstromrichter ist in der FIG 3 der DE 10 2005 059 760 A1 näher dargestellt. Durch die Verwendung eines Spannungszwischenkreis-Umrichters anstelle eines Stromzwischenkreis-Umrichters als Antriebs-Umrichter bei einem Wellengeneratorsystem als Booster-Antrieb wird das Bordnetz nicht nur frequenzmäßig vom Generator entkoppelt, sondern auch spannungsmäßig. Außerdem kann der Spannungszwischenkreis-Umrichter Blindleistung bereitstellen, so dass keine Blindleistungsmaschine mehr benötigt wird.

Wird als statischer Frequenzumformer des Wellengeneratorsystems ein Stromzwischenkreis-Umrichter verwendet, so wird neben einer Duplexdrossel und einem Transformator eine Blindleistungsmaschine mit Anwurfmotor benötigt. Wie bereits eingangs beschrieben, wird zur Erhöhung der Kurzschluss-Sicherheit eine Duplexdrossel benötigt, die idealerweise ein Spezial-Transformator ist. Der Transformator wird zur Spannungsanpassung zwischen Umrichter-Ausgangsspannung und Bordnetzspannung benötigt. Diese zusätzlichen Komponenten benötigen jeweils einen Einbauplatz, der auf Schiffen nicht reichlich vorhanden ist.

Würde man einen Spannungszwischenkreis-Umrichter als statischen Frequenzumformer des Wellengeneratorsystems verwenden, müsste für eine Spannungsanpassung zwischen Umrichter-Ausgangsspannung und Bordnetzspannung ein Transformator vorgesehen sein. Die beiden Stromrichter des Spannungszwischenkreis-Umrichters müssten entweder in Zwei-Punkt-Topologie (Niederspannung) oder Drei-Punkt-Topologie (Mittelspannung) ausgeführt sein. Bei Leistungen von 10MW und mehr müssten mehrere Zwei-Punkt- bzw. Drei-Punkt-Umrichter ausgangsseitig elektrisch parallel geschaltet werden, wobei eine Symmetrierungs-Regelung, eine so genannte Δi-Regelung, vorhanden sein müsste. In Niederspannungs-Umrichtern werden zur Zeit abschaltbare Halbleiterschalter, insbesondere Insulated-Gate-BipolarTransistoren (IGBT), der Spannungsklasse 1200V bzw. 1700V eingesetzt. Bei Mittelspannungs-Umrichtern werden dagegen IGBTs bzw. IGCTs der Spannungsklasse 3300V bzw. 4500V bzw. 6500V verwendet. Mit Anstieg der Spannungsklasse nimmt jedoch die Schaltfrequenz ab, aber der Halbleiterpreis zu.

Durch die begrenzten Schaltfrequenzen der IGBTs müssten auf der Bordnetzseite Filtermaßnahmen vorgenommen werden, um die geforderten Netzrückwirkungen der Klassifizierungsgesellschaften einhalten zu können. Gerade beim Einsatz von Mittelspannungsstromrichtern mit einer Zwischenkreisspannung von deutlich über 1kV ist die Schaltfrequenz auf wenige hundert Hertz beschränkt. Dadurch wird eine Filterauslegung zusätzlich erschwert. Die Filterauslegung ist von Haus aus schon schwierig, da es sich beim Bordnetz um ein Inselnetz handelt, welches abhängig von seinem Betriebszustand unterschiedliche Impedanzen und damit unterschiedliche Resonanzfrequenzen haben kann. Daher würde auch eine am Ausgang eines Spannungszwischenkreis-Umrichters wirkende resultierende Resonanzfrequenz variieren, wodurch eine Abstimmung der Filterauslegung auf die Schaltfrequenz des Spannungszwischenkreis-Umrichters sehr schwierig sein würde.

Durch die geringe Schaltfrequenz der verwendeten IGBTs des generator- bzw. netzseitigen Stromrichters eines Spannungszwischenkreis-Umrichters als statischen Frequenzumformer eines Wellengeneratorsystems ist die Dynamik dieses Umrichters eingeschränkt. Dadurch ist die Beherrschung von transienten Betriebszuständen, wie beispielsweise Netzkurzschluss, Wegfall und Wiederkehr der Netzspannung, Lastabwurf, trotz einer Überdimensionierung der Bauteile fast unmöglich. Außerdem neigt das erwähnte Filter in transienten Betriebszuständen zum Schwingen.

Besondere Bedeutung kommt der Beherrschung von Netzkurzschlüssen und anderen transienten Betriebszuständen zu. Um diese transienten Betriebszustände irgendwie beherrschen zu können, müsste der Spannungszwischenkreis-Umrichter eines Wellengeneratorsystems immer am Netz bleiben, d.h., er darf nicht wegen Überstrom abschalten. Dies könnte dadurch erreicht werden, dass sowohl im Normalbetrieb als auch im Kurzschlussfall der Strom mittels einer Zwei-Punkt-Regelung geregelt oder dass in einzelnen Phasen Zündsignale zeitweise gesperrt und anschließend wieder freigegeben werden würden. Dabei würden jedoch nicht vorhersehbare Oberschwingungen in der Umrichter-Ausgangsspannung entstehen, wodurch ein vorhandenes Netzfilter angeregt werden würde, wodurch die erforderlichen Grenzen für Netzharmonische nur mit großem Aufwand eingehalten werden könnten.

Aus diesen Gründen ist bis jetzt, insbesondere für Mittelspannungsanwendungen, noch kein Wellengeneratorsystem mit einem Spannungszwischenkreis-Umrichter als statischen Frequenzumformer aufgebaut worden, das die zuvor genannten Anforderungen im Mittelspannungsbereich vollständig erfüllt.

Der Erfindung liegt die Aufgabe zugrunde, ein Wellengeneratorsystem anzugeben, das als statischen Frequenzumformer einen Spannungszwischenkreis-Umrichter aufweist, mit dem insbesondere Netzkurzschlüsse dynamisch begrenzt werden sollen.

Diese Aufgabe wird mit den kennzeichnenden Merkmalen des Anspruchs 1 erfindungsgemäß gelöst.

Dadurch, dass der netzseitige Stromrichter eines Spannungszwischenkreis-Umrichters als Stromrichter mit verteilten Energiespeichern ausgebildet ist, kann in Abhängigkeit der Anzahl der Submodule eines jeden Ventilzweigs die Ausgangsspannung dieses Stromrichters an jede beliebige Bordnetzspannung angepasst werden. Durch die Anzahl der Submodule steigt ebenfalls die Treppenstufen-Anzahl des Spannungsverlaufs der Ausgangsspannung dieses Stromrichters, so dass auf der Bordnetzseite keine Filtermaßnahmen mehr getroffen werden müssen, um die geforderten Netzrückwirkungen der Klassifizierungsgesellschaften einhalten zu können. Ebenfalls durch die hohe Anzahl von Submodulen können im Mittelspannungs-Stromrichter abschaltbare Halbleiterschalter aus dem Low-Voltage-Bereich verwendet werden, die mit einer wesentlich höheren Schaltfrequenz betrieben werden können. Dadurch weist dieser Stromrichter mit verteilten Energiespeichern eine hohe resultierende Schaltfrequenz auf, so dass ein Ausgangsstrom dieses Stromrichters im Kurzschlussfall durch die schnelle Anpassung der Klemmenspannungen hochdynamisch begrenzt werden kann. Das heißt, dieser Stromrichter schaltet im Kurzschlussfall nicht mehr wegen Überstrom ab. Somit können die Anforderungen der Schiffsnetze im Hinblick auf die Einspeisung von Kurzschlussströmen einfach erfüllt werden. Das heißt, der erfindungsgemäße Spannungszwischenkreis-Umrichter als statischer Frequenzumrichter eines Wellengeneratorsystems weist eine Kurzschluss-Sicherheit auf, die ohne eine Duplexdrossel bereitgestellt werden kann.

Durch die hohen Schaltfrequenzen der verwendeten Low-Voltage-IGBTs (LV-IGBT) in den Submodulen des Stromrichters mit verteilten Energiespeichern weist dieser Stromrichter eine sehr hohe resultierende Schaltfrequenz auf. Dadurch kann die Grenzfrequenz einer zugehörigen Regelung ebenfalls zu hohen Werten verschoben werden, so dass diese außerhalb eines Bereichs möglicher Resonanzen des Bordnetzes liegt. Dadurch ist eine anlagenunabhängige Parametrierung möglich.

Aufgrund der Regelungseigenschaften eines Stromrichters mit verteilten Energiespeichern kann beim Spannungszwischenkreis-Umrichter, dessen netzseitiger Stromrichter ein Stromrichter mit verteilten Energiespeichern ist, und dessen generatorseitiger Stromrichter ein ungesteuerter Stromrichter, beispielsweise ein Diodengleichrichter, ist, kann ein Zwischenkreisstrom dieses Spannungszwischenkreis-Umrichters nahezu konstant gehalten werden. Dadurch weisen die Generatorströme des Generators des Wellengeneratorsystems einen niedrigeren Oberwellengehalt auf, wobei der Effektivwert niedriger ist. Dadurch, dass die Generatorströme nahezu blockförmig sind, reduzieren sich die Verluste des Wellengeneratorsystems.

Zur weiteren Erläuterung der Erfindung wird auf die Zeichnungen Bezug genommen, in denen Ausführungsformen eines erfindungsgemäßen Wellengeneratorsystems schematisch veranschaulicht sind.
- FIG 1: zeigt ein Prinzipschaltbild eines bekannten Schiffsantriebssystems mit einem Stromzwischenkreis-Umrichter als Wellengenerator-Antriebsumrichter, wogegen die
- FIG 2: ein Prinzipschaltbild dieses bekannten Schiffsantriebssystems mit einem Spannungszwischenkreis-Umrichter als Wellengenerator-Antriebsumrichter darstellt; in der
- FIG 3: ist eine erste Ausführungsform eines Wellengeneratorsystems nach der Erfindung dargestellt, und die
- FIG 4: zeigt eine zweite Ausführungsform eines Wellengeneratorsystems nach der Erfindung, wobei in der
- FIG 5: ein Prinzipschaltbild eines netzseitigen Stromrichters des Wellengeneratorsystems nach FIG 3 bzw. 4 in einer vorteilhaften Ausbildung veranschaulicht ist.

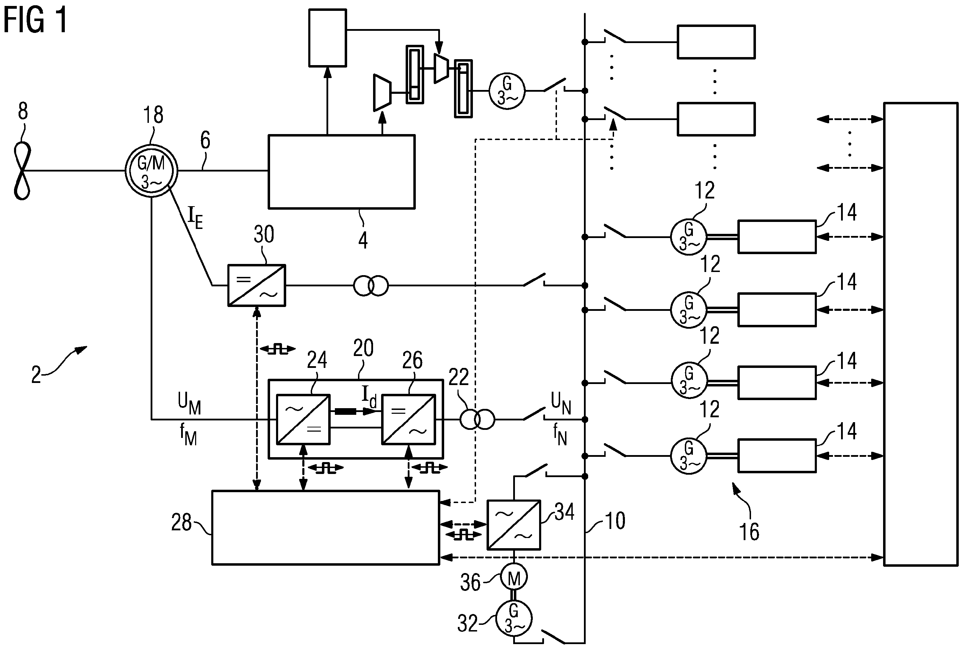

Das aus der DE 10 2006 020 144 B4 bekannte Schiffsantriebssystem 2 weist nach FIG 1 eine als langsam laufende Zweitakt-Dieselmotor ausgebildete Hauptmaschine 4 auf, die über eine Propellerwelle 6 einen Schiffspropeller 8 zum Antrieb des Schiffs aufweist. Zur Energieerzeugung für ein Schiffsnetz, veranschaulicht durch eine Bordnetz-Sammelschiene 10, sind mehrere Generatoren 12 vorgesehen, die jeweils von einer schneller als die Hauptmaschine laufenden Hilfsmaschine 14 angetrieben werden. Bei den Hilfsmaschinen 14 handelt es sich üblicherweise um schnell laufende Vier-Takt-Dieselmotoren. Üblicherweise sind jeweils ein Generator 12 und ein Dieselmotor 14 zu einem Dieselgeneratoraggregat 16 zusammengefasst.

Ein Wellengenerator/-motor 18 ist mechanisch mit der Propellerwelle 6 gekoppelt und elektrisch über einen Umrichter 20 und einen Transformator 22 mit der Bordnetz-Sammelschiene 10 des Schiffsnetzes verbunden. Als Umrichter 20 ist ein Stromzwischenkreis-Umrichter vorgesehen, der generator- und netzseitig jeweils einen steuerbaren Stromrichter 24 und 26 aufweist, die gleichspannungsseitig mittels einer Zwischenkreisdrossel miteinander elektrisch leitend verbunden sind. Die Steuersignale für diese beiden steuerbaren Stromrichter 24 und 26 werden von einem Steuer- und Regelungssystem 28 generiert. Da als Wellengenerator/-motor 18 eine langsam laufende Synchronmaschine verwendet wird, ist diese zusätzlich über einen Erregerstromrichter 30 mit der Bordnetz-Sammelschiene 10 elektrisch leitend verbunden. Da als Umrichter 20 des Wellengeneratorsystems ein Stromzwischenkreis-Umrichter vorgesehen ist, und dieser nur Wirkleistung in das Schiffsnetz einspeisen kann, wird der Blindleistungsbedarf des Schiffsnetzes von einer Blindleistungsmaschine 32 bereitgestellt. Diese Blindleistungsmaschine 32 arbeitet im Normalbetrieb nur als Phasenschieber und speist keine Wirkleistung in die Bordnetz-Sammelschiene 10 ein. Ein Anfahrumrichter 34 und ein Anfahrmotor 36 dienen zum Start der Blindleistungsmaschine 32. Die Steuerung des Anfahrumrichters 34 erfolgt ebenfalls durch das Steuer- und Regelungssystem 28.

Der Wellengenerator/-motor 18, der Stromzwischenkreis-Umrichter mit zugehörigem Steuer- und Regelungssystem 28 und die Blindleistungsmaschine 32 mit Anfahrumrichter 34 und Anfahrmotor 36 bilden ein Wellengeneratorsystem, das aus der eingangs genannten Veröffentlichung der DE-Zeitschrift "HANSA" bekannt ist.

Bei diesem bekannten Schiffsantriebssystem wird der Wellengenerator 18 als Motor betrieben, wodurch elektrische Energie aus dem Schiffsnetz mittels des Stromzwischenkreis-Umrichters und des Wellengenerator/-motor 18 in mechanische Energie umgewandelt wird. Dadurch werden Leistungsreserven im Schiffsnetz zur Vergrößerung der Antriebsleistung des Schiffs verwendet, wodurch entweder die Schiffsgeschwindigkeit erhöht oder bei gleichbleibender Schiffsgeschwindigkeit die Hauptmaschine 4 entlastet werden kann.

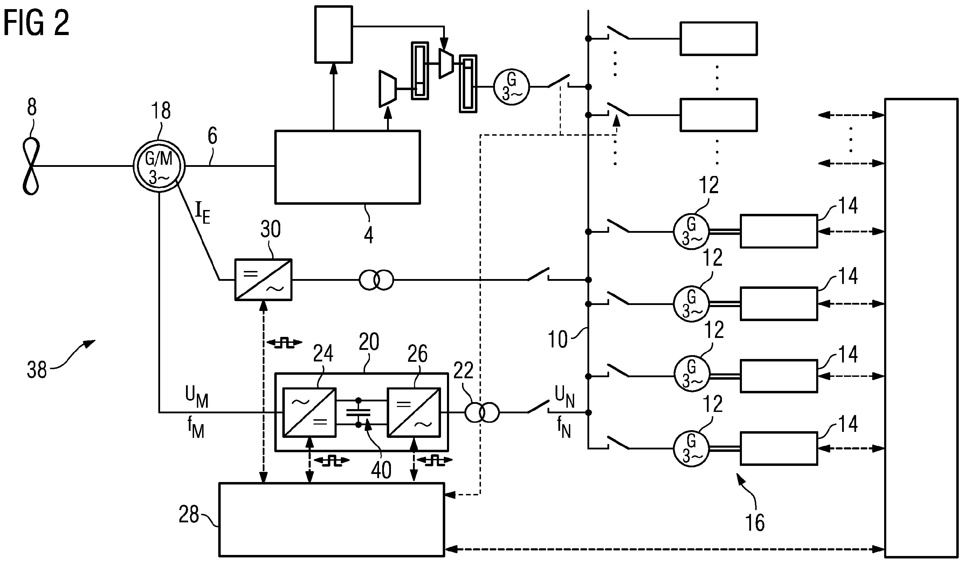

Um zumindest die gesonderte Blindleistungsmaschine 32 mit Anfahrumrichter 34 und Anfahrmotor 36 einsparen zu können, ist in FIG 2 ein Prinzipschaltbild eines weiteren bekannten Schiffsantriebssystems 38 schematisch dargestellt. Dieses Schiffsantriebssystem 38 unterscheidet sich vom Schiffsantriebssystem 2 gemäß FIG 1 dadurch, dass als Umrichter 20 ein Spannungszwischenkreis-Umrichter vorgesehen ist. Da der Wellengenerator 18 motorisch betrieben wird, weist dieser Spannungszwischenkreis-Umrichter neben einer Zwischenkreis-Kondensatorbatterie 40 generatorseitig ebenfalls einen steuerbaren Stromrichter 24 auf. Als steuerbare Stromrichter 24 und 26 dieses Spannungszwischenkreis-Umrichters ist jeweils ein selbstgeführter Pulsstromrichter, insbesondere ein IGBT-Pulsstromrichter, vorgesehen. Die Zwischenkreis-Kondensatorbatterie 40 ist derart bemessen, dass während der Umschaltung von Motorbetrieb in den Generatorbetrieb des Wellengenerators 18 elektrische Energie in das Schiffsnetz derart eingespeist werden muss, dass die Spannung und die Frequenz des Schiffsnetzes jeweils vorgegebene Grenzwerte nicht unterschreiten kann.

Dieses Wellengeneratorsystem wird nur bei einem ungeplanten Ausfall der Energieerzeugung durch das Abwärme-Rückgewinnungs-System vom Motorbetrieb auf Generatorbetrieb umgeschaltet. Diese Umschaltung dauert so lange, bis die Dieselgeneratorensätze 16 gestartet sind. Das heißt, der Generatorbetrieb des Wellengeneratorsystems ist nur für eine kurze Überbrückungszeit vorgesehen. Für diese Überbrückungszeit wird ein Oberwellengehalt im Bordnetz des Schiffs in Kauf genommen. Um diesen Oberwellengehalt im Bordnetz zu verringern, wären Filtermaßnahmen auf der Bordnetzseite erforderlich, die jedoch nicht dargestellt sind. Somit wird dieses Wellengeneratorsystem vorwiegend als Booster-Antrieb verwendet.

Dadurch, dass die Stromrichterventile beispielsweise Insulated-Gate-Bipolar-Transistoren (IGBT) des netzseitigen Stromrichters 26 des Spannungszwischenkreis-Umrichters wegen einer hohen Umrichter-Ausgangsspannung begrenzte Schaltfrequenzen aufweisen, wird die Filterauslegung eines vorhandenen Filters zusätzlich erschwert. Die Filterauslegung wird insbesondere dadurch erschwert, dass es sich beim Bordnetz eines Schiffs um ein Inselnetz handelt, welches abhängig von betriebenen Verbrauchern stark unterschiedliche Impedanzen und damit unterschiedliche Resonanzfrequenzen aufweisen kann. Daher variiert auch die an netzseitigen Anschlüssen des Umrichters 20 wirkende resultierende Resonanzfrequenz, wodurch eine Abstimmung der Filterauslegung auf die Schaltfrequenzen des Umrichters erschwert wird.

Infolge der begrenzten Schaltfrequenz der HV-IGBTs des netzseitigen Stromrichters 26 und damit verbundene, eingeschränkte Dynamik ist die Beherrschung von transienten Betriebszuständen, wie z.B. Lastabwurf, Kurzschluss im Bordnetz, Netzwiederkehr, schwierig und führt unweigerlich zu einer Überdimensionierung der Bauteile dieses Spannungszwischenkreis-Umrichters. Eine weitere Schwierigkeit, die schwer zu beherrschen ist, besteht darin, dass ein verwendetes Filter in transienten Betriebszuständen zum Schwingen neigt.

Um geforderte Netzrückwirkungen der Klassifizierungsgesellschaft einhalten zu können und Netzkurzschlüsse und andere transiente Betriebszustände beherrschen zu können, ist dieser Spannungszwischenkreis-Umrichter als statischer Frequenzumformer des Wellengeneratorsystems ungeeignet. Aus diesem Grund wird dieses Wellengeneratorsystem mit einem Spannungszwischenkreis-Umrichter überwiegend motorisch betrieben, wobei bei generatorischem Betrieb, der nur beim Auftreten einer Störung des Energieerzeugungssystems während einer Umschaltzeit umgesetzt wird, in Kauf genommen wird, dass die geforderten Netzrückwirkungen nicht eingehalten werden können. Ebenfalls wird angenommen, dass in diesem Betriebszustand transiente Betriebszustände nicht auftreten. Dieser generatorische Betrieb des Wellengeneratorsystems dauert nur so lange an, bis die Dieselgeneratoraggregate 16 gestartet sind.

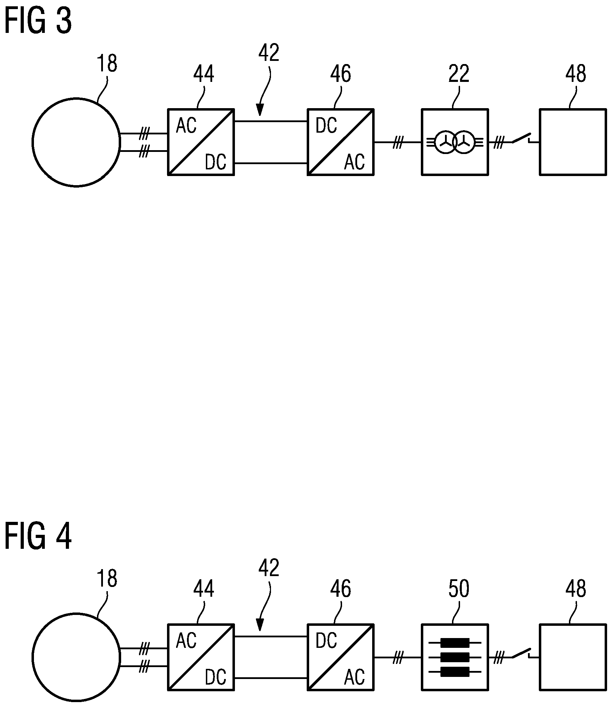

In FIG 3 ist eine erste Ausführungsform eines Wellengeneratorsystems nach der Erfindung schematisch veranschaulicht. Dieses erfindungsgemäße Wellengeneratorsystem weist neben einem Wellengenerator 18 einen Spannungszwischenkreis-Umrichter 42 auf, der als generatorseitigen Stromrichter 44 einen ungesteuerten Stromrichter, beispielsweise einen sechspulsigen oder höherpulsigen Diodengleichrichter, aufweist. Als generatorseitigen Stromrichter 44 kann auch ein mehrpulsiger selbstgeführter Stromrichter vorgesehen sein. Als netzseitigen (bordnetzseitig) Stromrichter 46 weist das erfindungsgemäße Wellengeneratorsystem einen Stromrichter mit verteilten Energiespeichern auf. Beide Stromrichter 44 und 46 sind gleichspannungsseitig direkt miteinander elektrisch leitend verbunden. Wechselspannungsseitig ist der Stromrichter 46 in der Ausführungsform Stromrichter mit verteilten Energiespeichern mittels eines Transformators 22 mit einem Bordnetz 48 verbindbar.

In FIG 4 ist eine zweite Ausführungsform eines Wellengeneratorsystems nach der Erfindung schematisch veranschaulicht. Diese Ausführungsform unterscheidet sich von der Ausführungsform gemäß FIG 3 dadurch, dass der netzseitige Stromrichter 46 in der Ausführungsform Stromrichter mit verteilten Energiespeichern wechselspannungsseitig mittels einer Netzdrossel 50 mit dem Bordnetz 48 verbindbar ist.

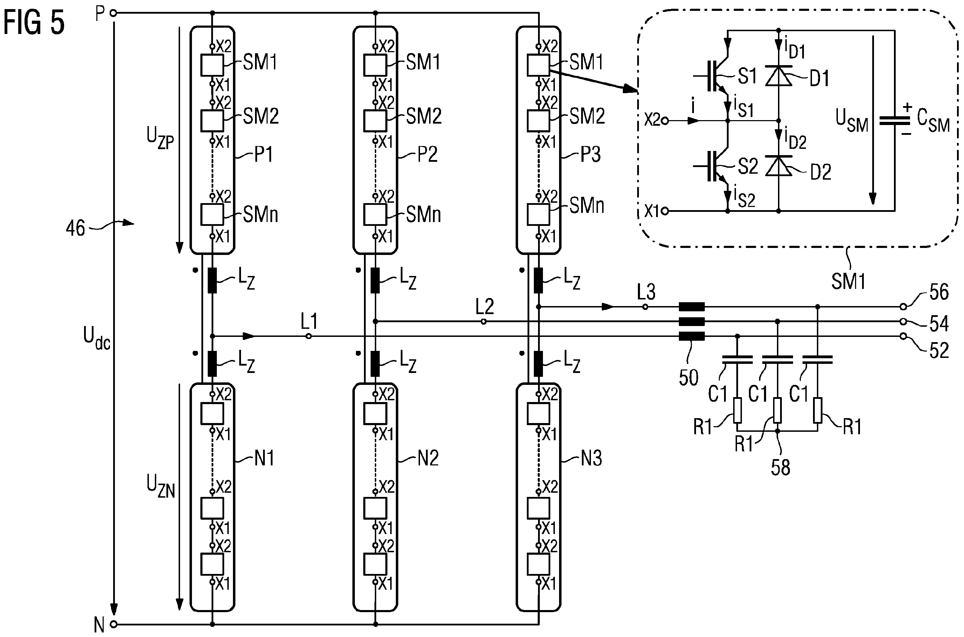

Ein Ersatzschaltbild des Stromrichters 46 mit verteilten Energiespeichern ist in FIG 5 näher dargestellt. Gemäß dieser Darstellung weist dieser Stromrichter 46 drei Phasenmodule auf, die jeweils einen oberen und einen unteren Ventilzweig P1 und N1 bzw. P2 und N2 bzw. P3 und N3 aufweisen. Diese beiden Ventilzweige P1, N1 bzw. P2, N2 bzw. P3, N3 eines jeden Phasenmoduls sind zu einem Brückenzweig verschaltet. Ein Verknüpfungspunkt eines oberen und einen unteren Ventilzweiges P1 und N1 bzw. P2 und N2 bzw. P3 und N3 ist als wechselspannungsseitiger Anschluss L1, L2 bzw. L3 eines jeden Phasenmoduls herausgeführt. Zur Glättung stromrichterinterner Kreisströme werden verkoppelte Zweigdrosseln L_{Z} eingesetzt. An diesen wechselseitigen Anschlüssen L1, L2 bzw. L3 ist die Netzdrossel 50 angeschlossen. Diese drei Phasenmodule sind elektrisch parallel zu einander und zu einer nicht näher dargestellten Gleichspannungs-Einspeiseeinrichtung (generatorseitige Stromrichter 44) geschaltet, die an den Gleichspannungs-Anschlüssen P und N des Stromrichters 2 mit verteilten Energiespeichern C_{SM} angeschlossen ist. Zwischen diesen Gleichspannungs-Anschlüssen P und N steht eine generierte Gleichspannung U_{dc} an.

Diesem Ersatzschaltbild ist ebenfalls zu entnehmen, dass jeder Ventilzweig P1, N1, P2, N2, P3 und N3 eine Vielzahl von elektrisch in Reihe geschalteten zweipoligen Submodulen SM1, SM2, ..., SMn aufweist. Jedes zweipolige Submodul SM1, SM2, ..., SMn weist gemäß der vergrößerten Darstellung des Submoduls SM1 einen unipolaren Speicherkondensator C_{SM}, zwei abschaltbare Halbleiterschalter S1 und S2 und zwei Dioden D1 und D2 auf. Die beiden abschaltbaren Halbleiterschalter S1 und S2 sind elektrisch in Reihe und diese Reihenschaltung elektrisch parallel zum unipolaren Speicherkondensator C_{SM} geschaltet. Antiparallel zu den abschaltbaren Halbleiterschaltern S1 und S2 ist jeweils eine Diode D1 bzw. D2 geschaltet. Diese Dioden D1 und D2 bilden somit jeweils eine Freilaufdiode. Ein Verbindungspunkt der beiden abschaltbaren Halbleiterschalter S1 und S2 ist als Modulanschluss X2 herausgeführt. Der negative Anschluss des unipolaren Speicherkondensators C_{SM} bildet einen zweiten Modulanschluss X1. Im geladenen Zustand des unipolaren Speicherkondensators C_{SM} fällt eine Kondensatorspannung U_{SM} ab.

Diese Kondensatorspannungen U_{SM1}, U_{SM2}, ..., U_{SMn} der zweipoligen Subsysteme SM1, SM2, ..., SMn eines jeden Ventilzweiges P1, N1, P2, N2, P3 und N3 addieren sich jeweils zu einer Ventilspannung U_{ZP1}, U_{ZN1}, U_{ZP2}, U_{ZN2}, U_{ZP3} und U_{ZN3}. Die Addition jeweils zweier Ventilspannungen U_{ZP1}, U_{ZN1} bzw. U_{ZP2} und U_{ZN2} bzw. U_{ZP3} und U_{ZN3} eines Phasenmoduls ergibt die zwischen den Gleichspannungs-Anschlüssen P und N anstehende Gleichspannung U_{dc}.

Jedes dieser zweipolige Submodule SM1, SM2, ..., SMn kann in einen von drei Schaltzuständen, nämlich die Schaltzustände I, II und III, gesteuert werden. Welche Klemmenspannung U_{X2X1} in welchem Schaltzustand I, II bzw. III an den Modulanschlüssen X2 und X1 ansteht, und wie in den Schaltzuständen I, II bzw. III die abschaltbaren Halbleiterschalter S1 und S2 angesteuert werden, ist der DE 101 03 031 A1 zu entnehmen, die diese dargestellte Stromrichter-Topologie offenbart.

Gegenüber der Ausführungsform der FIG 4 ist zwischen Netzdrossel 50 und Ausgangs-Anschlüssen 52, 54 und 56 des Wellengeneratorsystems jeweils eine Reihenschaltung eines Kondensators C1 und eines Widerstandes R1 geschaltet, wobei die freien Enden dieser Widerstände R1 miteinander elektrisch leitend verbunden sind. Die Reihenfolge der beiden Komponenten C1 und R1 der Reihenschaltung können auch gegenüber dieser Darstellung vertauscht sein. Dadurch werden dann die freien Enden der Kondensatoren C1 miteinander elektrisch leitend verbunden. Diese gedämpften Kondensatorzweige bilden mit den Induktivitäten der Netzdrossel 50 einen Tiefpassfilter, wobei der Verbindungspunkt 58 der drei Widerstände R1 einen Sternpunkt des Wellengeneratorsystems bildet. An diesen Verbindungspunkt 58 kann ein hochohmiger Widerstand gegen einen Erdungsanschluss des Bordnetzes 48 angeschlossen werden. Mittels eines derartigen hochohmigen Anschlusses kann ein Erdschluss an dem hochohmigen geerdeten Bordnetz 48 erfasst werden.

Bei einem Stromrichter 46 mit verteilten Energiespeichern C_{SM} wird durch die Anzahl der elektrisch in Reihe geschalteten zweipoligen Submodule SM1, SM2, ..., SMn einerseits die Anzahl der Treppenstufen einer treppenförmigen Ausgangsspannung bestimmt und andererseits kann die Umrichter-Ausgangsspannung an jede beliebige Amplitude des Bordnetzes, beispielsweise ein Mittelspannungsnetz, angepasst werden. Je höher die Anzahl der zweipoligen Submodule SM1, SM2, ..., SMn eines jeden Ventilzweigs P1, N1, P2, N2, P3 und N3 der Phasenmodule des Stromrichters 46 ist, desto sinusförmiger ist die Umrichter-Ausgangsspannung. Dadurch werden keine Filtermaßnahmen mehr benötigt, um die geforderten Netzrückwirkungen der Klassifizierungsgesellschaften einhalten zu können.

Als abschaltbare Halbleiterschalter S1 und S2 eines jeden zweipoligen Submoduls SM1, SM2, ..., SMn werden Insulated-Gate-Bipolar-Transistoren, insbesondere LV-IGBTs, verwendet. Diese LV-IGBTs mit Sperrspannungen von 1200V bzw. 1700V können gegenüber HV-IGBTs mit Sperrspannungen von 3300V, 4500V bzw. 6500V mit einer wesentlich höheren Pulsfrequenz getaktet werden. Außerdem sind die LV-IGBTs gegenüber den HV-IGBTs wesentlich preiswerter. Durch die Verwendung von LV-IGBTs im Mittelspannungs-Umrichter 42 und einer Vielzahl der zweipoligen Submodule SM1, SM2, ..., SMn kann der Ausgangsstrom dieses Umrichters 42 im Kurzschlussfall hochdynamisch begrenzt werden. Dadurch können die Anforderungen der Schiffsnetze im Hinblick auf die Einspeisung von Kurzschlussstrom einfach erfüllt werden. Da wegen der hohen Anzahl von zweipoligen Submodulen SM1, SM2, ..., SMn pro Ventilzweig P1, N1, P2, N2, P3 und N3 des Stromrichters 46 auf ein bordnetzseitiges Filter verzichtet werden kann, können transiente Betriebszustände leichter beherrscht werden. Dies liegt daran, dass die transienten Betriebszustände keine Schwingungen mehr anregen können, da bordnetzseitig kein Filter mehr vorhanden ist. Ebenfalls kann in Abhängigkeit der Anzahl der zweipoligen Submodule SM1, SM2, ..., SMn pro Ventilzweig P1, N1, P2, N2, P3 und N3 des Stromrichters 46 mit verteilten Energiespeichern C_{SM} dieser Stromrichter 46 einfach auf jede beliebige Ausgangsspannung skaliert werden, wodurch auf einen Transformator 22 in einer Vielzahl von Anwendungen verzichtet werden kann.

Durch die Verwendung eines Stromrichters 46 mit verteilten Energiespeichern als bordnetzseitiger Stromrichter 26 des Spannungszwischenkreis-Umrichters 42 eines Wellengeneratorsystems kann für das Steuer- und Regelungssystem 28 dieses Spannungszwischenkreis-Umrichters 42 eine wesentlich höhere Taktfrequenz verwendet werden, wodurch die Grenzfrequenz dieses Steuer- und Regelungssystems 28 außerhalb eines Bereichs möglicher Resonanzen liegt. Dadurch ist nun eine anlagenunabhängige Parametrierung des Umrichters 46 möglich.

Durch die Ausgestaltung des bordnetzseitigen Stromrichters 26 des Spannungszwischenkreis-Umrichters 42 als Stromrichter 46 mit einer Vielzahl von Energiespeichern C_{SM} kann nun ein Spannungszwischenkreis-Umrichter 42 als Wellengenerator-Umrichter 20 verwendet werden, so dass eine Blindleistungsmaschine 32 mit Anfahrumrichter 34 und Anfahrmotor 36 nicht mehr benötigt wird. Ebenfalls werden kein Filter und kein Transformator bordnetzseitig mehr benötigt. Durch diese Stromrichter-Topologie werden bei einem Mittelspannungs-Umrichter LV-IGBTs in den zweipoligen Submodulen SM1, SM2, ..., SMn verwendet, wodurch dieser Stromrichter 46 in Verbindung mit einer hohen Anzahl von Submodulen SM1, SM2, ..., SMn eine hohe resultierende Schaltfrequenz aufweist, so dass ein Kurzschlussstrom hochdynamisch begrenzt werden kann. Mittels eines Stromrichters 46 mit verteilten Energiespeichern C_{SM} als bordnetzseitiger Stromrichter 26 des Wellengenerator-Umrichters, der ein Spannungszwischenkreis-Umrichter ist, dessen Zwischenkreis-Kondensatorbatterie 40 auf eine Vielzahl von Speicherkondensatoren C_{SM} aufgeteilt ist, kann die Netzqualität auf einem dieselelektrisch angetriebenen Schiff wesentlich verbessert werden.

## Patentansprüche

1. Wellengeneratorsystem mit einem Wellengenerator (18), einem Spannungszwischenkreis-Umrichter (42) zur frequenz- und spannungsmäßigen Entkopplung von Wellengenerator und Bordnetz (10) und einer netzseitigen Induktivität, wobei der Spannungszwischenkreis-Umrichter (42) generatorseitig und netzseitig jeweils einen Stromrichter (44, 46) aufweist, die gleichspannungsseitig miteinander verknüpft sind, wobei es sich beim Bordnetz (10) um ein Inselnetz handelt, **dadurch gekennzeichnet, dass** der netzseitige Stromrichter (46) wenigstens zwei Phasenmodule aufweist, die jeweils einen oberen und einen unteren Ventilzweig (P1, N1, P2, N2, P3, N3) aufweisen, die jeweils eine Vielzahl von elektrisch in Reihe geschalteten zweipoligen Subsystemen (SM1, ..., SMn) aufweisen, die jeweils einen unipolaren Speicherkondensator (C_{SM}) aufweisen, dem eine Reihenschaltung zweier abschaltbarer Halbleiterschalter (S1, S2) jeweils mit einer antiparallel geschalteten Diode (D1, D2) elektrisch parallel geschaltet ist.

2. Wellengeneratorsystem nach Anspruch 1,
**dadurch gekennzeichnet, dass** der generatorseitige Stromrichter (44) ein mehrpulsiger Diodengleichrichter ist.

3. Wellengeneratorsystem nach Anspruch 1,
**dadurch gekennzeichnet, dass** der generatorseitige Stromrichter (44) ein mehrpulsiger selbstgeführter Stromrichter ist.

4. Wellengeneratorsystem nach Anspruch 1,
**dadurch gekennzeichnet, dass** die netzseitige Induktivität ein Transformator (22) ist.

5. Wellengeneratorsystem nach Anspruch 1,
**dadurch gekennzeichnet, dass** die netzseitige Induktivität eine Netzdrossel (50) ist.

6. Wellengeneratorsystem nach den Ansprüchen 1 und 5,
**dadurch gekennzeichnet, dass** jede netzseitige Induktivität, insbesondere jede Netzdrossel (50), mit einer Reihenschaltung eines Kondensators (C1) und eines Widerstands (R1) verknüpft ist, wobei die freien Enden der Widerstände (R1) miteinander elektrisch leitend verbunden sind.

7. Wellengeneratorsystem nach den Ansprüchen 1 und 5,
**dadurch gekennzeichnet, dass** jede netzseitige Induktivität, insbesondere jede Netzdrossel (50), mit einer Reihenschaltung eines Widerstands (R1) und eines Kondensators (C1) verknüpft ist, wobei die freien Enden der Kondensatoren (C1) miteinander elektrisch leitend verbunden sind.

## Claims

1. Shaft-driven generator system with a shaft-driven generator (18), a voltage source converter (42) for decoupling the shaft-driven generator and on-board network (10) by frequency and voltage and a network-side inductance, wherein the voltage source converter (42) has a converter (44, 46) on the generator side and network side respectively which are connected to each other on the DC voltage side, wherein the on-board network (10) is an isolated network, **characterised in that** the network-side converter (46) has at least two phase modules which each have an upper and a lower valve branch (P1, N1, P2, N2, P3, N3), which each have a plurality of two-pole sub-systems (SM1, ..., SMn) connected electrically in series, which each have a unipolar storage capacitor (C_{SM}), to which a series circuit of two semiconductor switches (S1, S2) that can be switched off is connected electrically in parallel, each semiconductor switch having a diode (D1, D2) connected antiparallel.

2. Shaft-driven generator system according to claim 1,
**characterised in that** the generator-side converter (44) is a multi-pulse diode rectifier.

3. Shaft-driven generator system according to claim 1,
**characterised in that** the generator-side converter (44) is a multi-pulse self-commutated converter.

4. Shaft-driven generator system according to claim 1,
**characterised in that** the network-side inductance is a transformer (22).

5. Shaft-driven generator system according to claim 1,
**characterised in that** the network-side inductance is a network choke (50).

6. Shaft-driven generator system according to claims 1 and 5,
**characterised in that** each network-side inductance, in particular each choke (50), is connected to a series circuit of a capacitor (C1) and a resistor (R1), wherein the free ends of the resistors (R1) are connected electrically-conductively to one another.

7. Shaft-driven generator system according to claims 1 and 5,
**characterised in that** each network-side inductance, in particular each choke (50), is connected to a series circuit of a resistor (R1) and a capacitor (C1), wherein the free ends of the capacitors (C1) are connected electrically-conductively to one another.

## Revendications

1. Système de génératrice à ligne d'arbre, comprenant une génératrice (18) à ligne d'arbre, un onduleur (42) de circuit intermédiaire de tension pour le découplage en fréquence et en tension de la génératrice à ligne d'arbre et du réseau (10) de bord et d'une inductance du côté du réseau, dans lequel l'onduleur (42) de circuit intermédiaire de tension a, du côté de la génératrice et du côté du réseau, respectivement un convertisseur (44, 46), qui sont combinés l'un à l'autre du côté de la tension continu, le réseau (10) de bord étant un réseau en îlot,
**caractérisé en ce que**
le convertisseur (46) du côté du réseau a au moins deux modules de phase, qui ont chacun une branche (P1, P2, P3) supérieure de soupape et une branche (N1, N2, N3) inférieure de soupape, qui ont chacune une pluralité de sous-systèmes (SM1, ..., SMn) bipolaires montées électriquement en série, qui ont chacun un condensateur (C_{SM}) d'accumulation unipolaire avec lequel est monté, en parallèle électriquement, un circuit série de deux commutateurs (S1, S2) à semiconducteur pouvant être bloqués, ayant chacun une diode (D1, D2) montée tête-bêche.

2. Système de génératrice à ligne d'arbre suivant la revendication 1,
**caractérisé en ce que** le convertisseur (44) du côté de la génératrice est un redresseur à diode multipulsé.

3. Système de génératrice à ligne d'arbre suivant la revendication 1,
**caractérisé en ce que** le convertisseur (44) du côté de la génératrice est un convertisseur multipulsé à commutation automatique.

4. Système de génératrice à ligne d'arbre suivant la revendication 1,
**caractérisé en ce que** l'inductance du côté du réseau est un transformateur (22).

5. Système de génératrice à ligne d'arbre suivant la revendication 1,
**caractérisé en ce que** l'inductance du côté du réseau est une bobine (50) de self de réseau.

6. Système de génératrice à ligne d'arbre suivant les revendications 1 et 5,
**caractérisé en ce que** chaque inductance du côté du réseau, notamment chaque bobine (50) de self du réseau, est combinée à un circuit série d'un condensateur (C1) et d'une résistance (R1), les extrémités libres des résistances (R1) étant reliées entre elles d'une manière conductrice de l'électricité.

7. Système de génératrice à ligne d'arbre suivant la revendication 1 et 5,
**caractérisé en ce que** chaque inductance du côté du réseau, notamment chaque bobine (50) de self du réseau, est combinée à un circuit série d'une résistance (R1) et d'un condensateur (C1), les extrémités libres des condensateurs (C1) étant reliées entre elles d'une manière conductrice de l'électricité.
